# NEUE EUROPÄISCHE PATENTSCHRIFT

(11) **EP 3 417 513 B2**
(45) Veröffentlichungstag und Bekanntmachung des Hinweises auf die Entscheidung über den Einspruch: **21.08.2024**
(45) Hinweis auf die Patenterteilung: 13.05.2020
(21) Anmeldenummer: 17709357.2
(22) Anmeldetag: 10.02.2017
(51) Int. Cl.: H01R 4/02, H01R 4/72, H01R 43/02

(54) **VERFAHREN UND VORRICHTUNG ZUR ABDICHTUNG VON KONTAKTSTELLEN AN ELEKTRISCHEN LEITUNGSVERBINDUNGEN**
METHOD AND DEVICE FOR SEALING CONTACT POINTS AT ELECTRICAL LINE CONNECTIONS
PROCÉDÉ ET DISPOSITIF D'ÉTANCHÉIFICATION DE POINTS DE CONTACT SUR DES CONNEXIONS DE LIGNES ÉLECTRIQUES

(30) Priorität: 19.02.2016 DE 102016102948
(43) Veröffentlichungstag der Anmeldung: 26.12.2018
(73) Patentinhaber: PKC Segu Systemelektrik GmbH, 36456 Barchfeld (DE)
(72) Erfinder: SCHNEIDER, Michael, 36433 Bad Salzungen (DE); KONIETZKO, Sebastian, 36448 Bad Liebenstein (DE)
(74) Vertreter: Engel, Christoph Klaus
(86) Internationale Anmeldenummer: PCT/EP2017/053019
(87) Internationale Veröffentlichungsnummer: WO 2017/140592

(56) Entgegenhaltungen:
- EP-A2- 2 922 145
- WO-A1-88/09068
- WO-A1-96/03785
- WO-A1-96/36976
- WO-A1-97/23924
- WO-A1-98/21796
- DE-A1- 10 023 217
- DE-A1- 102004 038 629
- DE-A1- 19 960 266
- DE-A1- 19 960 266
- DE-A1- 4 441 513
- DE-T2- 69 621 448
- DE-U1- 202007 010 817
- US-B1- 6 677 529

## Beschreibung

Die vorliegende Erfindung betrifft ein Verfahren zur Abdichtung eines Kontaktstellenbereichs mit mindestens einer Kontaktstelle an einer elektrischen Leitungsverbindung. Die Leitungsverbindung umfasst eine elektrische Leitung, welche wiederum mindestens einen elektrischen Leiter mit einer Leiterisolation aufweist, und mindestens ein mit der elektrischen Leitung verbundenes elektrisch leitfähiges Element. Im Kontaktstellenbereich weist der elektrische Leiter während der Herstellung der Leitungsverbindung keine Leiterisolation auf, d. h. das metallische Leitermaterial liegt frei. Das elektrisch leitfähige Element kann beispielsweise eine zweite elektrische Leitung, ein elektrischer Verbinder, ein elektrischer Anschlusskontakt o.ä. sein.

Das erfindungsgemäße Verfahren eignet sich insbesondere für Leitungsverbindungen, welche elektrische Leitungen mit mehreren elektrischen Leitern aufweisen. Die elektrischen Leitungen sind beispielsweise als ein- oder mehradrige Litzenleitungen ausgeführt. Ein Einsatzgebiet des erfindungsgemäßen Verfahrens ist zum Beispiel die Abdichtung von Kontaktstellen bei Kabelbäumen für elektrische Bordnetze von Fahrzeugen.

Bei elektrischen Geräten besteht bei bestimmten Anwendungen die Gefahr, dass über eine an das Gerät angeschlossene elektrische Leitung flüssige Medien, wie Wasser oder Öl, in das Gerät gelangen kann. Das eindringende Medium kann zwischen dem Kabelmantel und den einzelnen Aderisolierungen durch Kapillar-Effekte vorwärts dringen bzw. zwischen den Aderisolierungen und der metallischen Ader. Bei Leitungen aus mehreren Einzellitzen kann Medium in die Leitungsverbindung bzw. Zwischenräume der Litze gelangen und dort für Korrosion sorgen, was den Leitwert der Verbindungsstelle und des Leiters negativ beeinflusst, bis hin zum Zerfall des elektrischen Leiters.

Zur Realisierung einer Längsader-Feuchtigkeitssperre für elektrische Leitungen ist die Verwendung von Stoßverbindern bekannt. Des Weiteren kann Dichtmittel mittels Vakuumverfahren eingebracht werden. Alternativ können auch kapillardichte Leitungen zum Einsatz kommen, die allerdings teuer sind.

Die DE 38 71 607 T2 zeigt ein Verfahren zur Verlängerung der Lebensdauer eines mehradrigen elektrischen Versorgungskabels. Bei diesem Verfahren werden die Zwischenräume innerhalb des Kabels mit einem härtbaren, gegen Wasser abdichtenden Gemisch ausgefüllt. Nachfolgend erfolgt ein Aushärten dieses Gemisches in einen nicht-fließenden Zustand.

Die DE 101 38 104 A1 zeigt ein Verfahren zum Abdichten eines elektrischen Drahtes mit mehreren einzelnen Drahtlitzen, die in einer äußeren Isolierung angeordnet sind. Zunächst wird ein Segment der äußeren Isolierung von dem Draht entfernt, um einen entsprechenden Abschnitt der Drahtlitzen freizulegen. Anschließend erfolgt ein Verformen und Zusammenbonden der Drahtlitzen in zumindest einem Teil des Abschnittes, um ein massives Drahtsegment ohne Strömungsspalte zu bilden. Der zuletzt genannte Schritt kann beispielsweise durch Ultraschallschweißen, Laserstrahlschweißen oder Elektronenstrahlschweißen der Drahtlitzen in dem freigelegten Abschnitt realisiert werden.

Die DE 10 2009 041 255 B3 beschreibt ein Verfahren zum Herstellen einer elektrischen Leitung mit Längswasser-Sperre. In einem ersten Schritt erfolgt ein Durchtrennen der Leitung an der für die Längswasser-Sperre vorgesehenen Position. Anschließend wird der Mantel der Leitung im jeweiligen Endbereich entfernt. Dem schließt sich ein elektrisch leitendes Verlöten der einander entsprechenden Adern der beiden Kabelenden an. Hierzu werden die Adernenden auf den als Lötpads ausgebildeten entgegengesetzten Enden einer streifenförmigen Leiterbahn verlötet, die beabstandet nebeneinander auf einer gemeinsamen Platine angeordnet sind und durch Schlitze in der Platine voneinander getrennt sind. Die Platine mit den verbundenen Kabelenden wird in eine Form eingelegt. Nachfolgend erfolgt ein dichtes Umgießen oder Umspritzen des gesamten Verbindungsbereichs vom Mantel des einen Leitungsendes bis zum Mantel des anderen Leitungsendes mit Kunststoff.

Aus der EP 2 922 145 A2 ist ein Verfahren zur elektrischen Verbindung von zwei Leitungsenden von elektrischen Leitungen bekannt. In einem ersten Schritt werden die abisolierten Leitungsenden in eine Verbindungshülse eingeführt. Hierbei wird mindestens eines der Leitungsenden in einer Kammer der Verbindungshülse angeordnet. Die Kammer ist durch eine Trennwand zu dem anderen Leitungsende hin abgedichtet. In die Kammer der Verbindungshülse wird vorzugsweise ein Dichtkörper mit einem daran angebrachten Schlauch derart eingeführt, dass der Schlauch axial nach außen aus der Kammer herausragt. Anschließend erfolgt ein Umstülpen des aus der Kammer herausragenden Schlauchs über die Verbindungshülse, so dass der Schlauch die Verbindungshülse mantelförmig umgibt. Der als Schrumpfschlauch ausgebildete Schlauch wird thermisch auf die Verbindungshülse aufgeschrumpft.

Die DE 693 24 913 T2 beschreibt ein Verfahren zum Herstellen einer Lötverbindung zwischen einer Vielzahl von Drähten. Dazu wird eine anfängliche Verbindung zwischen den Drähten hergestellt, indem diese in einen Verbinder eingeführt werden. Der Verbinder umfasst eine dimensionsmäßig wärmerückstellbare Hülse, ein innerhalb der Hülse gehaltertes, mittels Induktion aufheizbares Verbindungselement und einen Loteinsatz, welcher mit dem Verbindungselement in thermischem Kontakt ist. Nachfolgend erfolgt eine Erwärmung des Verbinders. Hierzu wird das Verbindungselement einem Wechselmagnetfeld ausgesetzt, sodass es durch Induktion erwärmt wird, um dadurch den Loteinsatz zu schmelzen. Gleichzeitig wird das Äußere der Hülse mittels Heißluft bzw. Infrarotstrahlung erwärmt. Außerdem werden Abdichtelemente genutzt, welche aus einem schmelzbaren polymeren Material bestehen und nicht im Kontaktstellenbereich angeordnet sind. Die Abdichtelemente werden durch die Heißluft zum Schmelzen gebracht.

Die WO 88/09068 beschreibt eine Vorrichtung zur Erzeugung einer verbesserten Lötverbindung unter einem Schrumpfschlauch. In eine wärmeschrumpfbare Hülse werden elektrische Leitungen und ein Lötmitteleinsatz eingeführt. Der Lötmitteleinsatz weist dabei zwei Abschnitte auf, wobei die Abschnitte jeweils ein Lötmittel mit unterschiedlichem Schmelzpunkt beinhalten. Wenn die Vorrichtung die Hülse erwärmt, schmilzt das Lötmittel mit höherem Schmelzpunkt zunächst nicht, bis das Lötmittel mit niedrigerem Schmelzpunkt seine Viskosität ändert und schmilzt. Nachfolgend wird auch das Lötmittel mit höherem Schmelzpunkt zum Schmelzen gebracht. Das verwendete Lötmittel kann aus einem Gemisch aus Lot und Heißkleber bestehen.

Die Verwendung von Schrumpfschläuchen mit Schmelzkleber ist auch aus der Praxis hinlänglich bekannt. Diese Schrumpfschläuche werden durch Energieeintrag von außen auf den Kontaktstellenbereich aufgeschrumpft. Dabei soll der auf der Schrumpfschlauchinnenseite befindliche Schmelzkleber durch den Druck des Schrumpfschlauches in die vorhandenen Hohlräume gepresst werden. Zur Erhöhung des Klebervolumens kann am Kontaktstellenbereich Schmelzkleber aufgebracht werden bzw. am Kontaktstellenbereich können Kleberformstücke befestigt werden. Ein Nachteil dieses Verfahrens ist, dass durch die gute Wärmeleitfähigkeit des elektrischen Leiters das elektrische Leitermaterial nicht ausreichend erwärmt wird und der Schmelzkleber vor seinem Eindringen in die innersten Hohlräume zu stark abkühlt. Der Schmelzkleber verliert hierdurch seine Fluidität und kann somit nicht mehr in sämtliche Hohl- räume eindringen, was zu einer unzureichenden Abdichtung der Verbindungsstelle führt. Dieses Problem tritt insbesondere bei komplexeren Leitungsverbindungen, d. h. mit zunehmender Leitungszahl, und größeren Leitungsquerschnitten auf. Außerdem wird eine Dichtheit nur im unmittelbaren Kontaktstellenbereich erreicht. In den angrenzenden Bereichen kann nur eine bedingte Dichtheit realisiert werden. Die im Stand der Technik praktizierte Erwärmung des Schrumpfschlauches von außen, hat außerdem den Nachteil, dass der zu dichtende elektrische Leiter erst zum Ende des Prozesses die maximale Temperatur erreicht. Der Schrumpfschlauch schrumpft während das Leitermaterial an der zu dichtenden Stelle noch nicht ausreichend erwärmt ist und der Kleber beim Auftreffen auf diesen abkühlt und damit an Fluidität verliert. Des Weiteren ist bis zur Durcherwärmung ein relativ langer Erwärmungsprozess erforderlich.

So ist beispielsweise in der WO 1997/023924 A1 ein elektrischer Verbinder zum elektrischen Verbinden von mindesten zwei elektrischen Leitern beschrieben. Der Verbinder umfasst einen Schrumpfschlauch mit einer Innenbeschichtung aus Schmelzkleber. Der Verbinder wird mittels Induktion erwärmt, wobei zunächst ein Lot schmilzt und anschließend der Schmelzkleber und der Schrumpfschlauch schmelzen.

Die Aufgabe der vorliegenden Erfindung besteht somit darin, ein Verfahren zur Abdichtung eines Kontaktstellenbereichs mit mindestens einer Kontaktstelle bei elektrischen Leitungsverbindungen zur Verfügung zu stellen, welches eine verbesserte Abdichtung, insbesondere auch bei komplexeren Leitungsverbindungen und größeren Leitungsquerschnitten ermöglicht. Neben der Abdichtung im Umfeld der Dichtstelle soll auch eine Längsaderdichtheit erreicht werden und zwar nicht nur zwischen der Isolation und dem elektrischen Leiter sondern zwischen einzelnen Adern innerhalb einer Litze. Zur Lösung dieser Aufgabe dient ein Verfahren gemäß dem beigefügten Anspruch 1.

Das erfindungsgemäße Verfahren umfasst folgende Schritte:
Nachdem die elektrische Leitungsverbindung in elektrischer Hinsicht hergestellt wurde, beispielsweise durch Schweißen von mehreren elektrischen Leitern, wird zunächst ein Schrumpfschlauch am Außenumfang des Kontaktstellenbereichs in einem sich in Längsrichtung beidseitig des Kontaktstellenbereichs erstreckenden ersten Bereich angeordnet. Der erste Bereich erstreckt sich über den Kontaktstellenbereich hinaus. Nachfolgend erfolgt ein Erwärmen des Schrumpfschlauches auf Schrumpftemperatur. Erfindungswesentlich ist, dass während des Erwärmens des Schrumpfschlauches gleichzeitig ein induktives Erwärmen des elektrischen Leiters zumindest im Kontaktstellenbereich erfolgt. Durch das Erwärmen des Schrumpfschlauches von außen und das gleichzeitige induktive Erwärmen des elektrischen Leiters (von innen) wird im Inneren des Schrumpfschlauches und/oder am Außenumfang des Kontaktstellenbereichs aufgebrachter Schmelzkleber auf seine Verarbeitungstemperatur erwärmt.

Vorzugsweise wird der elektrische Leiter im Kontaktstellenbereich derart induktiv erwärmt, dass er sowohl an seinem Außenumfang als auch in seinem Kern eine Temperatur größer oder gleich der Schmelztemperatur (Verarbeitungstemperatur) des Schmelzklebers ist. Auf diese Weise erreichen die abzudichtenden Bereiche innerhalb des elektrischen Leiters, also auch zwischen den Adern einer Leiterlitze eine ausreichend hohe Temperatur, sodass der verflüssigte Schmelzkleber dort nicht vorzeitig erstarrt sondern besser in die Hohlräume des elektrischen Leiters eindringt und dort für eine Abdichtung sorgt. Die durch Induktion erzeugte Wärme am elektrischen Leiter überträgt sich gleichzeitig auf die Leiterisolation nahe der Kontaktstelle sodass diese gezielt verschmolzen werden kann. Diese Vorgehensweise unterstützt also die vollständige Abdichtung zwischen der Leitungsisolation und dem Leiter und sichert den dauerhaften Verbleib des Klebers in den Hohlräumen im Kernbereich der Verbindung.

Ein wesentlicher Vorteil des erfindungsgemäßen Verfahrens besteht darin, dass mittels zusätzlicher induktiver Erwärmung eine direkte Erwärmung des Leitermaterials erfolgt. Die zielgerichtete Energiezufuhr wird bestimmt durch eine auf das Leitermaterial abgestimmte Induktionsfrequenz, die Induktorgeometrie, die bevorzugt örtlich einstellbare Dichte der Energiemenge sowie die Einwirkzeit. Die zusätzliche Induktionserwärmung sorgt für eine Erhöhung der Temperatur innerhalb des Schrumpfschlauches. Auf diese Weise kann der Schmelzkleber bis ins Innere der elektrischen Leitung seine für eine optimale Verarbeitbarkeit erforderliche Fluidität erhalten. Hierzu ist ein Schmelzkleber auszuwählen, dessen optimale Fluidität im Bereich des Schmelzpunktes der Leiterisolation liegt. Der Schmelzkleber kann somit optimal in sämtliche Hohlräume eindringen und für eine gute Dichtwirkung sorgen. Dies ist vor allem bei Litzenleitungen vorteilhaft, da der Schmelzkleber bis in die Kapillare der Litzen gelangt und hierdurch kapillardichte Leitungen aufwandsarm realisiert werden können. Mittels induktiver Erwärmung können die Leiter höher und sowohl örtlich als auch in Bezug auf die Temperatur präziser erwärmt werden. Dies hat den Vorteil, dass Schmelzkleber mit höherem Schmelzpunkt und niedrigerer Viskosität bei hohen Temperaturen eingesetzt werden kann. Auf diese Weise besteht auch bei höheren Betriebstemperaturen nicht die Gefahr, dass sich der Schmelzkleber verflüssigt und herauslaufen kann. In praktischen Versuchen hat sich gezeigt, dass erfindungsgemäß Arten von Schmelzkleber mit so hohen Schmelztemperaturen genutzt werden können, dass im späteren Betrieb Temperaturen im Bereich von 150°C ohne weiteres zulässig sind. Es soll aber keine Einschränkung auf den genannten Temperaturbereich erfolgen, höhere Betriebstemperaturen sind durchaus möglich. Eine prozesssichere Abdichtung kann somit auch bei derart hohen Betriebstemperaturen sichergestellt werden. Zusätzliche Abdichtungsmaßnahmen sind nicht erforderlich.

Das erfindungsgemäße Verfahren ermöglicht eine aufwandsarme zuverlässige Abdichtung von Kontaktstellen, insbesondere auch bei komplexen Leitungsverbindungen und bei Anwendungen mit erhöhten Anforderungen an Temperaturbeständigkeit und bei rauen Umgebungsbedingungen, wie beispielsweise im Motorbereich von Verbrennungsmotoren.

Am Kontaktstellenbereich wird vorzugsweise ein Schrumpfschlauch mit einer Innenbeschichtung aus Schmelzkleber angeordnet, dessen optimale Verarbeitungsviskosität bei ca. 200°C liegt und der bei Temperaturen von ca. 150°C seine Position beibehält. Alternativ oder ergänzend kann vor dem Anordnen des Schrumpfschlauches zumindest im Kontaktstellenbereich Schmelzkleber aufgebracht werden. Das Aufbringen von zusätzlichem Schmelzkleber hat den Vorteil, dass dieser anders als ein im Schrumpfschlauch vorgesehener Kleber nicht vernetzt ist und somit bessere Fließeigenschaften und Hafteigenschaften besitzt. Das separate Aufbringen kann erfolgen durch direkten Kleberauftrag, anbringen einer Klebefolie oder von Formstücken am Kontaktstellenbereich.

Es besteht auch die Möglichkeit, ein Schmelzkleber-Formstück am Kontaktstellenbereich anzuordnen. Der Schmelzkleber weist vorzugsweise eine Verarbeitungstemperatur auf, welche im Schmelzbereich der Leiterisolation liegt. Durch Verwendung eines derartigen Schmelzklebers kommt es zum Verschmelzen der Leiterisolation in dem an den Kontaktstellenbereich unmittelbar angrenzenden Bereich, wodurch dieser Bereich ebenfalls zuverlässig abgedichtet werden kann. Bei mehradrigen Leitern verschmelzen die Leiterisolationen miteinander und sorgen für eine zusätzliche Abdichtung.

Als vorteilhaft hat es sich erwiesen, wenn während des Erwärmens des Schrumpfschlauches und des elektrischen Leiters ein äußerer Randbereich des Schrumpfschlauches gekühlt wird. Durch das Kühlen können Beschädigungen der Leiterisolation im Randbereich des Schrumpfschlauches sicher vermieden werden. Ein Kühlen ist aber nicht zwingend erforderlich, da am Schrumpfschlauchende das Temperaturgefälle zuweilen schon ausreichend ist, so dass keine Beschädigung der Leiterisolation auftritt. Bei Leitungsverbindungen, an welchen nur einseitig elektrische Leitungen beteiligt sind, genügt eine Kühlung des Schrumpfschlauchendes, in welchem die elektrischen Leitungen angeordnet sind, da nur hier die Gefahr einer Beschädigung der Leiterisolation besteht.

Der Schrumpfschlauch kann bevorzugt am Kontaktstellenbereich einer Leitungsverbindung umfassend mindestens zwei elektrische Leitungen angeordnet werden. Die elektrischen Leitungen weisen wiederum mindestens einen elektrischen Leiter mit einer Leiterisolation, vorzugsweise mehrere elektrische Leiter auf.

Die elektrischen Leiter besitzen im Kontaktstellenbereich zunächst keine Leiterisolation bzw. sind von dieser während der Herstellung der elektrischen Verbindung befreit. Die beiden elektrischen Leitungen können über einen elektrischen Verbinder miteinander verbunden sein. Die elektrischen Leiter sind beispielsweise Kupferleiter.

Alternativ kann der Schrumpfschlauch auch zur Abdichtung des Kontaktstellenbereichs einer Leitungsverbindung umfassend mindestens eine elektrische Leitung und ein als elektrischer Verbinder oder elektrischer Anschlusskontakt ausgeführtes elektrisch leitfähiges Element dienen.

Die dafür erforderliche schnelle und örtlich variable Temperatur im ersten Bereich wird durch die Kombination aus Erwärmung des Schrumpfschlauches mit der induktiv hervorgerufenen Erwärmung des Leiters ermöglicht. Dafür kann eine Vorrichtung vorgesehen sein, welche über eine Wärmequelle Wärme an den Schrumpfschlauch liefert und gleichzeitig ein Magnetfeld erzeugt, in welchem sich die elektrische Leitung befindet, um diese mithilfe der entstehenden Induktionswärme zu erwärmen. Die Vorrichtung umfasst zunächst eine Wärmequelle zum Erwärmen des Schrumpfschlauches auf Schrumpftemperatur. Die Erwärmung des Schrumpfschlauches kann in an sich bekannter Weise, beispielsweise durch Heißluft oder Infrarotstrahlung erfolgen. Die Vorrichtung umfasst weiterhin eine Induktionsanlage zum induktiven Erwärmen des elektrischen Leiters zumindest im Kontaktstellenbereich auf eine für die Verarbeitbarkeit bzw. das Schmelzen des Schmelzklebers optimale Temperatur.

Bevorzugt kann das mittels Induktionsanlage erzeugte Magnetfeld in unterschiedlichen Abschnitten verschieden stark ausgebildet werden, damit benachbart zur Kontaktstelle an der Leitung verschiedene Temperaturprofile vorliegen.

Die Ermittlung der für das Verfahren erforderlichen Parameter erfolgt beispielsweise folgendermaßen. Zunächst wird die benötigte Energie der Induktionsanlage mittels Einstellteilen grob ermittelt. Dies erfolgt optisch, beispielsweise über eine thermografische Messung. Anschließend werden die für das Heißluftschrumpfen benötigten Parameter Zeit und Temperatur mittels Tests ermittelt. Die beiden Prozesse werden nachfolgend miteinander verbunden. Es wird ein Musterteil gefertigt. Der Schrumpfschlauch wird entfernt und der Verschmelzungsgrad der Leiterisolation wird begutachtet. Je nach Ergebnis erfolgt ggf. eine Anpassung der Energie der Induktionsanlage. Dieser Vorgang wird so lange ausgeführt bis das gewünschte Ergebnis vorliegt. Alternativ können auch weitere automatisierte Prozesse zur Ermittlung der jeweils passenden Parameter angewendet werden.

Die Vorrichtung ist vorzugsweise mit einer Kühlvorrichtung ausgestattet, mit deren Hilfe die äußeren Randbereiche bedarfsweise gekühlt werden können.

Nachfolgend werden bevorzugte Anwendungen für das erfindungsgemäße Verfahren anhand der beigefügten Zeichnungen näher erläutert. Ebenso werden die einzelnen Verfahrensschritte näher beschrieben, die ausgeführt werden, um diese bevorzugten Anwendungen herzustellen. Es zeigen:
- Fig. 1:: einen abgedichteten Kontaktstellenbereich einer Leitungsverbindung gemäß einer ersten Ausführungsform;
- Fig. 2:: einen abgedichteten Kontaktstellenbereich der Leitungsverbindung gemäß einer zweiten Ausführungsform;
- Fig. 3:: einen abgedichteten Kontaktstellenbereich der Leitungsverbindung gemäß einer dritten Ausführungsform;
- Fig. 4:: einen abgedichteten Kontaktstellenbereich der Leitungsverbindung gemäß einer vierten Ausführungsform;
- Fig. 5:: einen abgedichteten Kontaktstellenbereich der Leitungsverbindung gemäß einer fünften Ausführungsform;
- Fig. 6:: eine Prinzipdarstellung einer Vorrichtung zur Herstellung des abgedichteten Kontaktstellenbereiches gemäß Fig. 5 mit dem sich einstellenden Temperaturverlauf;
- Fig. 7:: ein Schaubild der wesentlichen Prozessschritte für die Erzeugung des abgedichteten Kontaktstellenbereiches.

Die in den Figuren gezeigten Leitungsverbindungen 02 umfassen jeweils mindestens eine elektrische Leitung 03 und ein mit der elektrischen Leitung 03 verbundenes elektrisch leitfähiges Element. Das elektrisch leitfähige Element kann beispielsweise als elektrischer Leiter 04, elektrischer Verbinder 12 oder elektrischer Anschlusskontakt 14 ausgebildet sein.

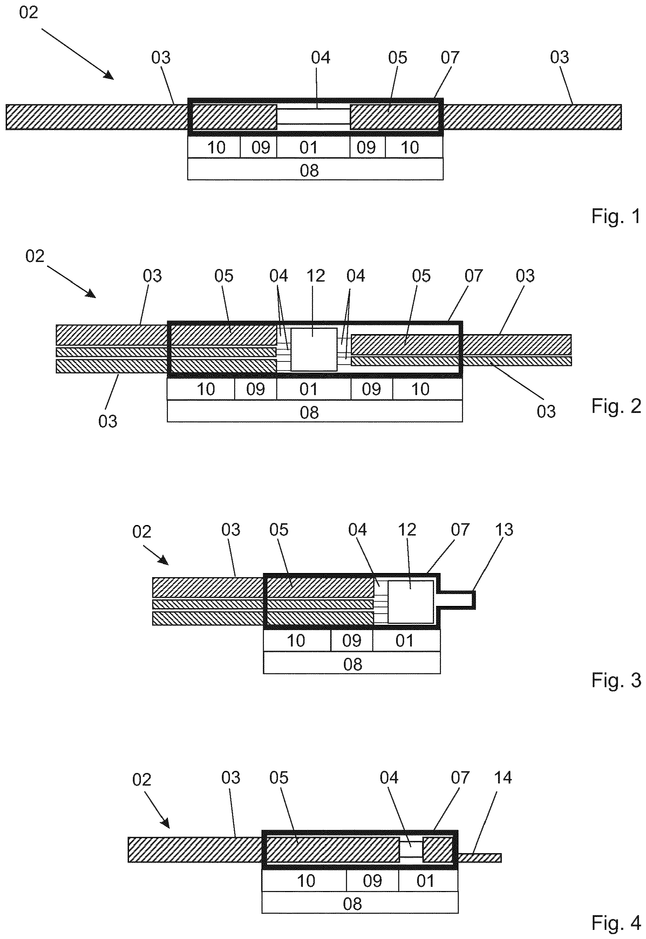

Fig. 1 zeigt einen abgedichteten Kontaktstellenbereich 01 einer Leitungsverbindung 02 gemäß einer ersten Ausführungsform. Die Leitungsverbindung 02 umfasst zwei elektrische Leitungen 03. Die elektrischen Leitungen 03 weisen jeweils einen elektrischen Leiter 04 mit einer Leiterisolation 05 auf. Beide Leitungen 03 sind im Kontaktstellenbereich 01 miteinander verbunden. Im Kontaktstellenbereich 01 besitzen die elektrischen Leiter 04 keine Leiterisolation 05. Zwischen den beiden elektrischen Leitern 04 besteht vorzugsweise eine Schweißverbindung, welche beispielsweise mittels Ultraschallschweißen realisiert wurde. Im gezeigten Ausführungsbeispiel weisen die Leitungen 03 jeweils einen elektrischen Leiter 04 auf. Die Leitungen 03 können natürlich auch mehrere Leiter 04 umfassen. Die Leiter 04 sind vorzugsweise Litzenleiter. Ebenso können ein- oder beidseitig auch mehrere Leitungen 03 angeordnet sein, welche im Kontaktstellenbereich 01 miteinander verbunden sind. Es könnte sich alternativ auch um eine durchgehende elektrische Leitung 03 handeln, die im Kontaktstellenbereich 01 von der Leiterisolation 05 befreit ist.

Klarstellend wird darauf hingewiesen, dass es auf die Art der elektrischen Leiter und die Art der Verbindung für die Realisierung der Erfindung nicht ankommt. Im einfachsten Fall kann die elektrische Leitung auch eine einstückige, durchgehende Leitung sein, deren Isolation in einem Abschnitt entfernt oder beschädigt wurde, sodass ein frei liegender Kontaktstellenbereich besteht, an welchem eine Abdichtung gemäß der Erfindung hergestellt werden soll.

Zum Abdichten des Kontaktstellenbereichs 01 der Leitungsverbindung 02 dient ein Schrumpfschlauch 07, der sich am Außenumfang des Kontaktstellenbereichs 01 in einem sich in Längsrichtung des Kontaktstellenbereichs 01 verlaufenden ersten Bereich 08 erstreckt. Der erste Bereich 08 erstreckt sich beidseitig über den Kontaktstellenbereich 01 hinaus.

Die Abdichtung des Kontaktstellenbereichs 01 wird mittels des erfindungsgemäßen Verfahrens, wie nachfolgend beschrieben, hergestellt. In einem ersten Schritt erfolgt die Anordnung des Schrumpfschlauches 07 am Außenumfang des Kontaktstellenbereichs 01. Hierbei wird die Schrumpfschlauchlänge so gewählt, dass sich der Schrumpfschlauch 07 beidseitig über den Kontaktstellenbereich 01 hinaus erstreckt. Der Schrumpfschlauch 07 besitzt vorzugsweise eine Innenbeschichtung aus Schmelzkleber. Ergänzend oder alternativ kann vor Anordnung des Schrumpfschlauches 07 Schmelzkleber direkt auf den Kontaktstellenbereich 01 aufgebracht werden bzw. in Form eines Schmelzkleberformstücks am Kontaktstellenbereich 01 positioniert werden. Der Schmelzkleber weist vorzugsweise eine Verarbeitungstemperatur im Schmelzbereich der Leiterisolation 05 auf.

Nachfolgend erfolgt ein Erwärmen des Schrumpfschlauches 05 auf Schrumpftemperatur, vorzugsweise mittels Heißluft oder Infrarotstrahlung. Während des Erwärmens des Schrumpfschlauches 05 werden gleichzeitig die elektrischen Leiter 04 zumindest im Kontaktstellenbereich 01 induktiv erwärmt. Hierbei erwärmt sich der im Kontaktstellenbereich 01 befindliche Schmelzkleber auf seine Verarbeitungstemperatur, wobei der Schmelzkleber auf das vorgewärmte Leitermaterial trifft, sodass die Fließfähigkeit des Klebers erhalten bleibt und der Kleber somit in sämtliche Hohlräume eindringen kann und für eine gute Dichtwirkung sorgt.

Das Leitermaterial kann im Kontaktstellenbereich 01 während der Ausführung des erfindungsgemäßen Verfahrens beispielsweise auf Temperaturen im Bereich von 210 bis 300 °C erwärmt werden. Im zweiten Bereich 09 sollte die Temperatur des Leiters 04 noch so hoch sein, dass im zweiten Bereich 09 ein Verschmelzen der Leiterisolation 05 ermöglicht wird. Im äußeren Randbereich 10 werden hingegen Temperaturen angestrebt, welche so niedrig sind, dass es zu keiner Beschädigung der Leiterisolation 05 in diesem Bereich kommt. Hierzu sollte die Temperatur im äußeren Randbereich 10 vorzugsweise unterhalb des Schmelzbereichs der Leiterisolation 05 liegen. Der äußere Randbereich 10 kann zusätzlich gekühlt werden, beispielsweise mittels Kaltluft, um den Randbereich entsprechend niedrig zu temperieren. Auf eine Kühlung kann verzichtet werden, wenn durch das Temperaturgefälle die Temperatur im äußeren Randbereich 10 bereits unterhalb des Schmelzbereichs der Leiterisolation 05 liegt.

Fig. 2 zeigt einen abgedichteten Kontaktstellenbereich 01 der Leitungsverbindung 02 gemäß einer zweiten Ausführungsform. Die vorliegende Leitungsverbindung 02 umfasst über einen elektrischen Verbinder 12 verbundene elektrische Leitungen 03. Mit einer ersten Seite des elektrischen Verbinders 12 sind drei elektrische Leitungen 03 verbunden, während mit einer gegenüberliegenden zweiten Seite des elektrischen Verbinders 12 zwei elektrische Leitungen 03 verbunden sind. Der elektrische Verbinder 12 ist als Durchgangsverbinder ausgeführt. Die elektrischen Leitungen 03 weisen jeweils einen elektrischen Leiter 04 auf, welcher mit einer Leiterisolation 05 versehen ist. Im Kontaktstellenbereich 01 ist keine originäre Leiterisolation 05 mehr vorhanden. Das Abdichten und damit gleichzeitig elektrische Isolieren des Kontaktstellenbereichs 01 der Leitungsverbindung erfolgt wiederum mittels Schrumpfschlauch 07.

Fig. 3 zeigt einen abgedichteten Kontaktstellenbereich 01 der Leitungsverbindung 02 gemäß einer dritten Ausführungsform. Die dargestellte Leitungsverbindung 02 beinhaltet drei elektrische Leitungen 03, welche mit einem elektrischen Verbinder 12 beispielsweise durch Ultraschallschweißen oder mittels einer Crimphülse verbunden sind. Der elektrische Verbinder 12 ist als Endverbinder ausgeführt. Die elektrischen Leitungen 03 sind mit der gleichen Seite des elektrischen Verbinders 12 verbunden. Der zur Abdichtung und Isolation des Kontaktstellenbereichs 01 dienende Schrumpfschlauch 07 besitzt eine sich über den elektrischen Verbinder 12 hinaus erstreckende Verlängerung 13, welche einen geringeren Durchmesser als der Schrumpfschlauch 07 im Kontaktstellenbereich 01 aufweist.

Zur Herstellung des in Fig. 3 dargestellten abgedichteten Kontaktstellenbereichs 01 wird der Schrumpfschlauch 07 wie bereits beschrieben erwärmt. Gleichzeitig erfolgt im Kontaktstellenbereich 01 eine induktive Erwärmung des elektrischen Leiters 04. Durch die Erwärmung von Leiter 04 und Schrumpfschlauch 07 wird der am Kontaktstellenbereich 01 befindliche Schmelzkleber auf seine Verarbeitungstemperatur gebracht und kann dadurch in sämtliche abzudichtende Hohlräume eindringen. In dem sich einseitig an den Kontaktstellenbereich 01 anschließenden zweiten Bereich 09 kommt es infolge der Erwärmung zu einem Schmelzen der Leiterisolation 05, wodurch eine zusätzliche Abdichtung im zweiten Bereich 09 realisiert wird. Der an den zweiten Bereich 09 angrenzende äußere Randbereich 10 wird hingegen nicht beschädigt, da die Temperatur dort niedriger gehalten wird.

Fig. 4 zeigt einen abgedichteten Kontaktstellenbereich 01 der Leitungsverbindung 02 gemäß einer vierten Ausführungsform. Die Leitungsverbindung 02 umfasst eine elektrische Leitung 03, welche mit einem elektrischen Anschlusskontakt 14 verbunden ist. Der elektrischen Anschlusskontakt 14 kann beispielsweise ein Kabelschuh oder ein Crimpkontakt sein. Zur Abdichtung dient erneut ein Schrumpfschlauch 07.

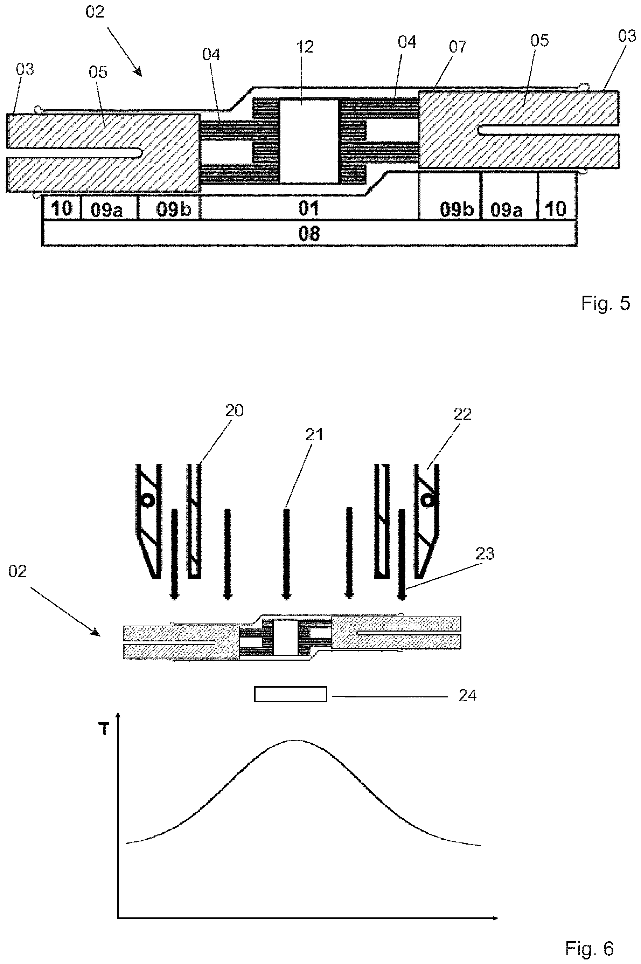

Fig. 5 zeigt eine nochmals abgewandelte Ausführungsform der Leitungsverbindung. Zwischen den insgesamt vier elektrischen Leitungen 03 (zwei auf jeder Seite) ist wiederum der elektrische Verbinder 12 angeordnet, um alle elektrischen Leiter 04 miteinander elektrisch zu verbinden. Der Kontaktstellenbereich 01 umfasst den elektrische Verbinder 12, hier ein ultraschallgeschweißter Abschnitt, und die abisolierten Abschnitte der elektrischen Leiter 04. Länge und Breite des elektrischen Verbinders 12 ergeben sich aus den jeweiligen Vorgaben für den Anwendungsfall und unter Berücksichtigung der eingesetzten Schweißmaschine. Im Kontaktstellenbereich 01 soll der eingesetzte Schmelzkleber in die Hohlräume zwischen den Leitern eingebracht werden. Soll dabei eine Kapillarabdichtung erreicht werden, ist dies nur über den Klebereintrag in diesem Bereich möglich. Der zweite Bereich 09 ist bei dem hier dargestellten Beispiel in einen Primärdichtbereich 09a und einen Sekundärdichtbereich 09b unterteilt. Im Primärdichtbereich 09a, der an den äußeren Randbereich 10 angrenzt, sorgt der Schmelzkleber für eine Verkleben des Schrumpfschlauchs 07 mit der Leiterisolation 05. Im Sekundärdichtbereich 09b, der an den Kontaktstellenbereich 01 angrenzt, kommt es aufgrund der Erwärmung der Leiterisolation 05 außerdem zum gasdichten Verschmelzen des Isolationsmaterials zwischen den einzelnen elektrischen Leitungen 04. Dazu wird mithilfe des Induktors und ggf. seitlicher Kühlluft ein Wärmeeintragsprofil erzeugt, welches im Sekundärdichtbereich 09b zu einer höheren Temperatur als im Primärdichtbereich 09a führt, wobei die Temperatur im Sekundärdichtbereich 09b durch die Schmelztemperatur des Isolationsmaterials bestimmt ist. Im Sekundärdichtbereich 09b verschmelzen die Leitungsisolationen 05 untereinander, was zu einer Abdichtung zwischen den Leitungen 03 führt. Am Außenumfang bilden die Leitungsisolationen in diesem Abschnitt einen gemeinsamen Isolationsmantel, der nach außen mit dem Schmelzkleber in Verbindung steht. Der Schmelzkleber dichtet zwischen dem Schrumpfschlauch 07 und dem gemeinsamen Isolationsmantel des Leitungsbündels ab.

Im äußeren Im Randbereich 10 wird stattdessen die Temperatur während des Prozesses so gewählt, dass keine Veränderung der mechanischen und optischen Eigenschaften der Isolation auftritt. In diesem Abschnitt ist weder eine Aushärten der Isolation, noch ein Verschmelzen oder einer Rissbildung gewünscht. Diese Temperaturführung wird erreicht, indem im Randbereich 10 durch den Induktor keine oder nur sehr wenig Energie eingetragen wird und bei Bedarf eine Kühlung durch Zufuhr von Kühlluft erfolgt.

Fig. 6 zeigt eine Prinzipdarstellung einer Vorrichtung zur Herstellung des abgedichteten Kontaktstellenbereiches, wie er in Fig. 5 dargestellt ist. Oberhalb der Leitungsverbindung 02 befindet sich eine Heißluftzufuhr 20, welche erwärmte Luft 21 auf den zu erwärmenden Abschnitt des Schrumpfschlauchs 07 leitet. Alternativ oder kumulativ könnte Infrarotstrahlung eingesetzt werden. Um in dem äußeren Randbereich eine unerwünschte Temperaturerhöhung zu vermeiden, befindet sich rechts und links der Heißluftzufuhr 20 jeweils ein Abschnitt einer Kühlluftzufuhr 22, über welche kühle Luft 23 eingeblasen wird. Schließlich ist ein Induktor 24 vorgesehen, dessen Bauform generell bekannt ist und der dem induktiven Energieeintrag in den elektrischen Leiter dient. In Fig. 6 ist darüber hinaus schematisch der Verlauf der Temperatur T eingezeichnet, wie er sich durch die Anwendung der erläuterten Vorrichtung bei der Erwärmung der Leitungsverbindung in deren einzelnen Abschnitten einstellt.

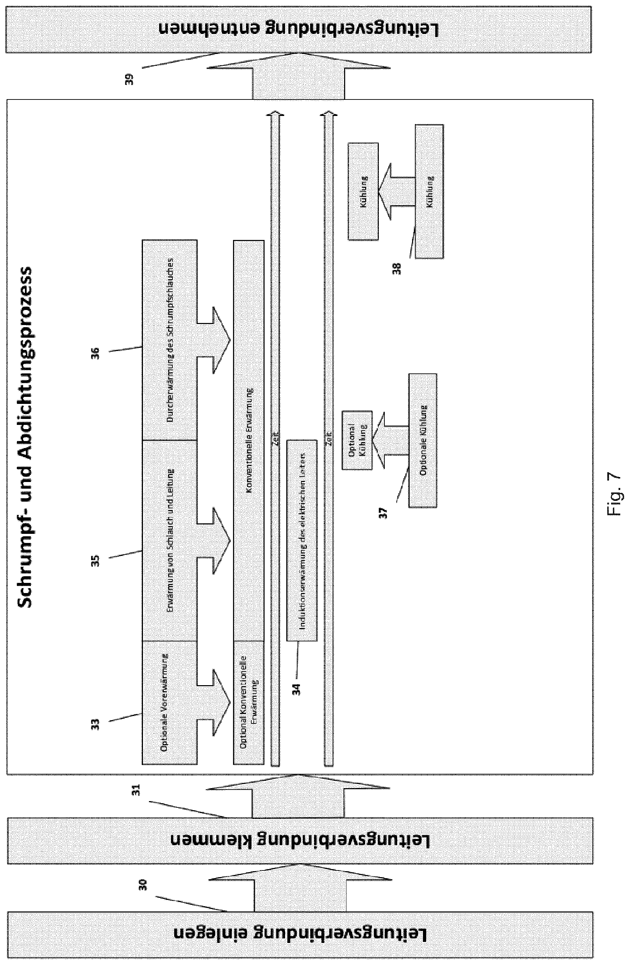

In dem in Fig. 7 dargestellten Schaubild werden die wesentlichen Prozessschritte zusammengefasst, die zur Erzeugung des abgedichteten Kontaktstellenbereiches durchlaufen werden. In vorbereitenden Schritten 30, 31 wird die Leitungsverbindung in der zuvor beschriebenen Vorrichtung eingelegt und festgeklemmt. Währen des eigentlichen Schrumpf- und Abdichtungsprozesses 32 laufen in zeitlicher Folge die folgenden Schritte ab: Im Schritt 33 kann bei Bedarf eine optionale Vorerwärmung erfolgen. Dies ist immer dann zweckmäßig, wenn der Luftspalt zwischen dem Schrumpfschlauch und der elektrischen Leitung groß ist und durch die Vorerwärmung das Anlegen des Schrumpfschlauches an die Leitung erreicht werden soll. Im nachfolgenden Schritt 34 wird die Induktionserwärmung initiiert. Im wesentlichen gleichzeitig erfolgt z. B. durch Heißluft im Schritt 35 die Erwärmung des Schrumpfschlauchs und des Schmelzklebers. Der elektrische Leiter wird vorwiegend durch Induktion erhitzt, hierdurch schmilzt die Leiterisolation an. Durch die äußere Erwärmung wird der Schrumpfschlauch erwärmt, der daraufhin schrumpft und den notwendigen Druck erzeugt, um die geschmolzenen Leiterisolation zu verschmelzen und den Kleber in die Hohlräume zu drücken. Im folgenden Schritt 36 kommt es zur Durcherwärmung des Schrumpfschlauches. Durch das benötigte Wärmegefälle nach Außen kann es dazu kommen, dass der Schrumpfschlauch insbesondere in den äußeren Randzonen nach der Induktion nicht richtig anliegt. Um das Anliegen zu garantieren wird mittels konventioneller Erwärmung der Schlauch in seine benötigte Form geschrumpft und Lufteinschlüsse werden verdrängt. Somit erfolgt während der Schritte 35 und 36 durchgehend eine konventionelle Erwärmung z. B. über Heißluftzufuhr. Bereits während der konventionellen Erwärmung kann es zweckmäßig sein, im Schritt 37 eine optionale Kühlung vorzunehmen. Um bei einer komplexen Leitungsverbindung das benötigte Wärmegefälle zu erreichen ist ein Kühlen der Randzonen notwendig. Das als elektrischer Leiter gewöhnlich eingesetzte Kupfermaterial ist gut wärmeleitend und trägt schnell die Wärme nach Außen. Bei dicken Kupferquerschnitte würde es ohne Kühlung daher dazu kommen, dass die Leiterisolation über die Randzonen hinaus schmilzt. Hingegen kann es bei geringen Querschnitten dazu kommen, das eine Verschmelzen auch in den gewünschten Bereichen noch nicht eintritt. Schließlich erfolgt im Schritt 38 eine zwingende Kühlung. Da viel Energie in die Anordnung eingebracht wird, ist die Leitungsverbindung nach dem Prozess sehr heiß und muss abgekühlt werden. Dies kann aktiv z. B. durch Druckluft erfolgen oder passiv durch eine Verweilzeit vor der Weiterverarbeitung. Zudem ist die Kühlung vorteilhaft, da manche Materialien sonst nacharbeiten würden. Durch mechanische Beanspruchung im heißen Zustand können Risse in der Verschmelzung entstehen, die zu Undichtigkeiten führen. Nach Abschluss des Prozesses kann die Leitungsverbindung im Schritt 39 aus der Vorrichtung entnommen werden.

### Bezugszeichenliste

- 01 -: Kontaktstellenbereich
- 02 -: Leitungsverbindung
- 03 -: elektrische Leitung
- 04 -: elektrischer Leiter
- 05 -: Leiterisolation
- 06 -: -
- 07 -: Schrumpfschlauch
- 08 -: erster Bereich
- 09 -: zweiter Bereich
- 10 -: äußerer Randbereich
- 11 -: -
- 12 -: elektrischer Verbinder
- 13 -: Verlängerung des Schrumpfschlauches
- 14 -: Anschlusskontakt

- 20 -: Heißluftzufuhrkanal
- 21 -: erwärmte Luft
- 22 -: Kühlluftkanal
- 23 -: kühle Luft
- 24 -: Induktor

- 30 -: Leitungsverbindung einlegen
- 31 -: Leitungsverbindung festklemmen
- 32 -: Schrumpf- und Abdichtungsprozess
- 33 -: optionale Vorerwärmung
- 34 -: Induktionserwärmung
- 35 -: Erwärmung Schrumpfschlauch und Schmelzkleber
- 36 -: Durcherwärmung des Schrumpfschlauches
- 37 -: optionale Kühlung
- 38 -: Kühlung
- 39 -: Leitungsverbindung entnehmen

## Patentansprüche

1. Verfahren zur Abdichtung eines Kontaktstellenbereichs (01) mit mindestens einer Kontaktstelle an einer elektrischen Leitungsverbindung (02), wobei die Leitungsverbindung (02) mindestens eine elektrische Leitung (03) und mindestens ein mit dieser verbundenes elektrisch leitfähiges Element (03, 12, 14) umfasst, wobei die elektrische Leitung (03) mindestens einen elektrischen Leiter (04) mit einer Leiterisolation (05) aufweist, die jedoch im Kontaktstellenbereich (01) entfernt ist, folgende Schritte umfassend:
- Anordnen eines Schrumpfschlauches (07) am Außenumfang des Kontaktstellenbereichs (01) in einem sich in Längsrichtung beidseitig über den Kontaktstellenbereich (01) hinaus erstreckenden ersten Bereich (08);
- Erwärmen des Schrumpfschlauches (07) durch eine Wärmequelle von außen auf Schrumpftemperatur;
- während des Erwärmens des Schrumpfschlauches (07) zusätzlich Erzeugen eines Magnetfelds zum induktiven Erwärmen des elektrischen Leiters (04) im Kontaktstellenbereich (01), sodass im Inneren des Schrumpfschlauches (07) und/oder am Außenumfang des Kontaktstellenbereichs (01) angeordneter Schmelzkleber auf seine Schmelztemperatur erwärmt wird;
- während des Erwärmens des Schrumpfschlauches (07) zusätzlich induktives Erwärmen des elektrischen Leiters (04) in einem zweiten Bereich (09), der an den Kontaktstellenbereich (01) angrenzt, sodass die Leiterisolation (05) in diesem Bereich bis auf ihre Schmelztemperatur erwärmt wird.

2. Verfahren nach Anspruch 1, **dadurch gekennzeichnet, dass** der elektrische Leiter (04) im Kontaktstellenbereich (01) derart induktiv erwärmt wird, dass er sowohl an seinem Außenumfang als auch in seinem Kern eine Temperatur größer oder gleich der Schmelztemperatur des Schmelzklebers ist.

3. Verfahren nach Anspruch 1 oder 2, **dadurch gekennzeichnet, dass** das Erwärmen des Schrumpfschlauches (07) auf Schrumpftemperatur durch von Außen aufgebrachte Heißluft und/oder eingestrahlte Infrarotstrahlung erfolgt.

4. Verfahren nach einem der Ansprüche 1 bis 3, **dadurch gekennzeichnet, dass** vor dem Anordnen des Schrumpfschlauches (07) zumindest im Kontaktstellenbereich (01) Schmelzkleber aufgebracht wird.

5. Verfahren nach einem der Ansprüche 1 bis 4, **dadurch gekennzeichnet, dass** am Kontaktstellenbereich (01) ein Schrumpfschlauch (07) mit einer Innenbeschichtung aus Schmelzkleber angeordnet wird.

6. Verfahren nach einem der Ansprüche 1 bis 5, **dadurch gekennzeichnet, dass** zumindest im Kontaktstellenbereich (01) Schmelzkleber mit einer Schmelztemperatur, welche im Schmelztemperaturbereich der Leiterisolation (05) liegt, aufgebracht wird und/oder über den Schrumpfschlauch (07) an den Kontaktstellenbereich (01) geführt wird.

7. Verfahren nach einem der Ansprüche 1 bis 6, **dadurch gekennzeichnet, dass** während des Erwärmens des Schrumpfschlauches (07) und des elektrischen Leiters (04) ein äußerer Randbereich (10) des Schrumpfschlauches (07) gekühlt wird.

8. Verfahren nach einem der Ansprüche 1 bis 7, **dadurch gekennzeichnet, dass** der Schrumpfschlauch (07) am Kontaktstellenbereich (01) einer Leitungsverbindung (02), welche mindestens eine elektrische Leitung (03) und ein als elektrischer Verbinder (12) oder elektrischer Anschlusskontakt 14 ausgeführtes elektrisch leitfähiges Element besitzt, angeordnet wird.

## Claims

1. A method for sealing a contact point area (01), having at least one contact point at an electrical line connection (02), the line connection (02) including at least one electrical line (03) and at least one electrical conductive element (03, 12, 14) connected thereto, the electrical line (03) having at least one electrical conductor (04) with conductor insulation (05), which, however, is removed in the contact point area (01), comprising the following steps:
- arranging a heat shrink tube (07) on the outer circumference of the contact point area (01) in a first area (08)that extends in the longitudinal direction beyond the contact point area (01) on both sides;
- heating the heat shrink tube (07) to the shrinkage temperature from the outside via a heat source;
- during the heating of the heat shrink tube (07), additionally generating of a magnetic field for inductive heating of the electrical conductor (04) in the contact point area (01), so that hot-melt adhesive situated inside the heat shrink tube (07) and/or on the outer circumference of the contact point area (01) is heated to its melting temperature;
- during the heating of the heat shrink tube (07), additionally inductive heating of the electrical conductor (04) in a second area (09) adjoining the contact point area (01), so that the conductor insulation (05) in said area is heated to its melting temperature.

2. The method according to claim 1, wherein the electrical conductor (04) is inductively heated in the contact point area (01) in such way that the temperature on its outer circumference and also in its core is greater than or equal to the melting temperature of the hot-melt adhesive.

3. The method according to claim 1 or 2, wherein the heating of the heat shrink tube (07) to the shrinkage temperature takes place via externally applied hot air and/or irradiated infrared radiation.

4. The method according to one of the claims 1 to 3, wherein hot-melt adhesive is applied at least in the contact point area (01) before the heat shrink tube (07) is arranged.

5. The method according to one of the claims 1 to 4, wherein a heat shrink tube (07) having an inner coating of hot-melt adhesive is situated at the contact point area (01).

6. The method according to one of the claims 1 to 5, wherein hot-melt adhesive having a melting temperature that is in the melting temperature range of the conductor insulation (05) is applied at least in the contact point area (01), and/or is guided over the heat shrink tube (07) to the contact point area (01).

7. The method according to one of the claims 1 to 6, wherein an outer border area (10) of the heat shrink tube (07) is cooled while the heat shrink tube (07) and the electrical conductor (04) are being heated.

8. The method according to one of the claims 1 to 7, wherein the heat shrink tube (07) is situated at the contact point area (01)of a line connection (02) which has at least one electrical line (03) and an electrically conductive element (12) that is designed as an electrical connector or electrical terminal contact (14).

## Revendications

1. Procédé d'étanchéification d'une zone de point de contact (01) comportant au moins un point de contact au niveau d'une connexion par câble électrique (02), dans lequel la connexion par câble (02) comprend au moins un câble électrique (03) et au moins un élément conducteur électrique (03,12,14) connecté à celui-ci, le câble électrique (03) présentant au moins un conducteur électrique (04) doté d'un isolant de conducteur (05) qui est toutefois à distance dans la zone du point de contact (01), comprenant les étapes suivantes :
- disposition d'un tuyau rétractable (07) au niveau de la circonférence extérieure de la zone du point de contact (01) dans une première zone (08) s'étendant dans le sens longitudinal bilatéralement au-delà de la zone du point de contact (01) ;
- chauffage du tuyau rétractable (07) par une source de chaleur depuis l'extérieur à la température de rétraction ;
- pendant le chauffage du tuyau rétractable (07), génération en outre d'un champ magnétique pour le chauffage inductif du conducteur électrique (04) dans la zone du point de contact (01), de sorte que de la colle thermofusible disposée à l'intérieur du tuyau rétractable (07) et/ou au niveau de la circonférence extérieure de la zone du point de contact (01) est chauffée à sa température de fusion ;
- pendant le chauffage du tuyau rétractable (07), en outre chauffage inductif du conducteur électrique (04) dans une seconde zone (09) qui jouxte la zone du point de contact (01), de sorte que l'isolant du conducteur (05) est chauffé à sa température de fusion dans cette zone.

2. Procédé selon la revendication 1, **caractérisé en ce que** le conducteur électrique (04) est chauffé par induction dans la zone du point de contact (01) de manière à ce qu'il ait une température supérieure ou égale à la température de fusion de la colle thermofusible aussi bien au niveau de sa circonférence extérieure que dans son noyau.

3. Procédé selon la revendication 1 ou 2, **caractérisé en ce que** le chauffage du tuyau rétractable (07) est effectué à température de rétraction par de l'air chaud apporté de l'extérieur et/ou du rayonnement infrarouge irradié.

4. Procédé selon une des revendications 1 à 3, **caractérisé en ce que**, avant la disposition du tuyau rétractable (07), de la colle thermofusible est appliquée au moins dans la zone du point de contact (01).

5. Procédé selon une des revendications 1 à 4, **caractérisé en ce que**, au niveau de la zone de point de contact (01), un tuyau rétractable (07) comportant un revêtement intérieur en colle thermofusible est disposé.

6. Procédé selon une des revendications 1 à 5, **caractérisé en ce que**, du moins au niveau de la zone de point de contact (01), de la colle thermofusible ayant une température de fusion qui se situe dans la plage de température de fusion de l'isolant du conducteur (05) est appliquée et/ou conduite par l'intermédiaire du tuyau rétractable (07) vers la zone de point de contact (01).

7. Procédé selon une des revendications 1 à 6, **caractérisé en ce que**, pendant le chauffage du tuyau rétractable (07) et du conducteur électrique (04), une zone périphérique extérieure (10) du tuyau rétractable (07) est refroidie.

8. Procédé selon une des revendications 1 à 7, **caractérisé en ce que** le tuyau rétractable (07) est disposé au niveau de la zone de point de contact (01) d'une connexion par câble (02) qui comporte au moins un câble électrique (03) et un élément conducteur électrique réalisé sous forme d'un connecteur électrique (12) ou d'un contact de raccordement électrique (14).
